# EUROPEAN PATENT SPECIFICATION

(11) **EP 3 135 652 B1**
(45) Date of publication and mention of the grant of the patent: **14.04.2021**
(21) Application number: 14890014.5
(22) Date of filing: 25.04.2014
(51) Int. Cl.: C04B 35/66, C04B 35/16, C04B 35/19

(54) **INORGANIC EXPANDABLE REFRACTORY COMPOSITION**
EXPANDIERBARE ANORGANISCHE FEUERFESTE ZUSAMMENSETZUNG
COMPOSITION RÉFRACTAIRE EXPANSIBLE INORGANIQUE

(43) Date of publication of application: 01.03.2017
(73) Proprietor: Kyung Dong One Corporation, Seoul 150-870 (KR)
(72) Inventor: BAE, Seung Hun, Osan-si Gyeonggi-do 447-060 (KR); KOO, Kyoung Mo, Pyeongtaek-si Gyeonggi-do 17922 (KR)
(74) Representative: reuteler & cie SA
(86) International application number: PCT/KR2014/003634
(87) International publication number: WO 2015/163502

(56) References cited:
- FR-A5- 2 212 826
- KR-A- 20000 045 052
- KR-A- 20050 046 154
- KR-A- 20050 070 809
- KR-A- 20110 073 849
- KR-A- 20130 027 869
- KR-A- 20140 081 918
- US-A- 4 118 325
- US-A- 4 218 502
- US-A- 4 521 333

## Description

### [Technical Field]

The present invention relates to expandable powder and an inorganic expandable refractory composition containing the same. In particular, the present invention relates to expandable powder capable of preventing strength and resistance force of steel frames and structures from being deteriorated by high temperature heat in case of fire by being coated on a surface requiring fire resisting capacity such as steel frame structures of buildings, ships, factory plants and tunnels, and an inorganic expandable refractory composition containing the same.

### [Background Art]

As buildings become higher and larger, steel frame structures are mostly used, and in ships, damage to the crew, engine and fuel parts result in severe damages. In tunnels, structure collapse may readily occur in case of fire, and in storage tanks such as LNG/LPG, steel factories and oil refineries, or plants handling large quantities of organic compounds and the like, there are significant fire damages. Therefore, to prevent such damages, fireproof materials are coated on important structures.

Such fireproof coating materials are classified into fireproof spray coats, fireproof paints, fireproof mastics and the like. The fireproof spray coat consists of mixing materials having fire resisting capacity in a slurry state with cement, plaster and the like as an adhesive for spray coating, and fire resisting capacity is obtained with the spray coated thickness. The fireproof paint or the fireproof mastic consists of mixing materials expanded by flames with an aqueous or oil adhesive for thin coating, and fire resisting capacity is demonstrated through expansion in case of fire.

However, the fireproof spray coat is weak to vibrations and there is concern for dust generation depending on the form, which is not suitable for use in clean environments, and the fireproof paint has problems of generating ammonia gas, a toxic gas, when foamed, and being readily crushed at a very high temperature or flames (hot blast) accompanying an external pressure since it normally has an expanded structure due to the organic compounds. The fireproof mastic is a material improving such properties of the fireproof paint, however, its main components are organic compounds as well, and the fireproof mastic has weak expansibility, thus coating needs to thicker compared to the fireproof paint, leading to lower economic feasibility KR 2011 0073849 discloses an inorganic expandable refractory composition comprising expandable powder comprising alkali silicate.

US 4 118 325 A discloses an inorganic expandable refractory composition comprising expandable powder.

There are inorganic substance-based paints using expansibility of a silicate in view of the above-mentioned problems of the fireproof paint or the fireproof mastic. However, the inorganic substance-based paints have not been actually commercialized due to problems such that expansion is actually made by organic compounds, or uniformity decreases when a silicate expands in flames, and properties of a silicate are such that, foamed cells are combined and produce big space causing cracks or performance decline.

As disclosed in "foaming fireproof paint composition" and the like of Korean Patent Application Publication No. 10-2003-0101084 A, in a foaming fireproof paint composition employing a silicate with adjusted mole ratio as a binder and using a reinforcing agent, a sieved pigment, a foaming auxiliary material and additives, a capsule holding inert gas or expanded graphite is used for solving a problem of silicate foaming. However, the preparation method has not been realized due to its difficulty.

Korean Patent Application Publication No. 10-1995-0019288 A discloses an inorganic substance-based foaming fireproof paint consisting of sodium silicate, calcium carbonate, sepiolite, inorganic fiber and water. However, the paint has a problem in that the coated layer needs to be thick in order to exhibit fire resisting capacity, and expansion is non-uniform in flames.

### [Disclosure]

### [Technical Problem]

The present invention has been made in view of the above, and the present invention is directed to providing an inorganic expandable refractory composition that uses the silicate as a binder, forms a uniform foam layer honeycomb structure by mixing expandable powder consisting of an alkali metal oxide and silicon oxide having inner moisture content adjusted in advance, the silicate expanding at a high temperature in case of fire and the expandable powder consisting of an alkali metal oxide and silicon oxide expanding individually, and which has excellent thermal resistance by enhancing flame withstanding strength and heat insulation by using a silicate, a filler and a refractory auxiliary material.

The present invention is also directed to providing an inorganic expandable refractory composition having a thin coating thickness, physical properties capable of extending high temperature and fireproofing time, and economic feasibility.

### [Technical Solution]

One embodiment of the present invention provides an inorganic expandable refractory composition including expandable powder consisting of a dry silicate.

According to the embodiment of the present invention, the expandable powder of a dry silicate consists of 10 wt% to 50 wt% of an alkali metal oxide, 30 wt% to 80 wt% of silicon oxide and 0.1 wt% to 20 wt% of water, and the alkali metal oxide is an oxide of alkali metals belonging to group 1A and selected from the group consisting of sodium, potassium and lithium.

According to the embodiment of the present invention, the dry silicate may be at least one selected from the group consisting of sodium silicate, potassium silicate and lithium silicate.

According to the embodiment of the present invention, the expandable powder includes a foaming auxiliary material and a refractory auxiliary material, and herein, the foaming auxiliary material is at least one selected from the group consisting of potassium bicarbonate, calcium bicarbonate, sodium bicarbonate, magnesium bicarbonate and ammonium bicarbonate, and the refractory auxiliary material is at least one selected from the group consisting of antimony compounds, aluminum hydroxide, magnesium hydroxide, calcium carbonate, boric acid, borax, kaoline-group minerals, bentonite, clay, ettringite, phosphates, phosphorous-based flame retardants, halogen-based flame retardants and thermally curable resins, wherein the kaoline-group mineral may be at least one selected from among kaolinite, montmorillonite, dickite, illite, sericite or halloysite.

According to the embodiment of the present invention, the expandable powder may further include at least one selected from the group consisting of an organic silane-based coupling agent, a titanate-based coupling agent, a zirconate-based coupling agent, a silicone-based water repelling agent and a fluorine-based water repelling agent to provide hydrophobicity.

In addition, according to the invention, the refractory composition consists of 1 wt% to 70 wt% of the expandable powder, 20 wt% to 80 wt% of a silicate binder, 0.05 wt% to 10 wt% of a stabilizer and 0.01 wt% to 10 wt% of fiber.

According to the embodiment of the present invention, the refractory composition silicate binder may be at least one selected from the group consisting of sodium silicate, potassium silicate and lithium silicate.

According to the embodiment of the present invention, the refractory composition includes a foaming auxiliary material and a refractory auxiliary material, and the foaming auxiliary material is at least one selected from the group consisting of potassium bicarbonate, calcium bicarbonate, sodium bicarbonate, magnesium bicarbonate and ammonium bicarbonate, and the refractory auxiliary material is at least one selected from the group consisting of antimony compounds, aluminum hydroxide, magnesium hydroxide, calcium carbonate, boric acid, borax, kaoline-group minerals, bentonite, clay, ettringite, phosphates, phosphorous-based flame retardants, halogen-based flame retardants and thermally curable resins. The kaoline-group mineral may be at least one selected from the group consisting of kaolinite, montmorillonite, dickite, illite, sericite or halloysite.

According to the embodiment of the present invention, the refractory composition may further include at least one selected from the group consisting of an organic silane-based coupling agent, a titanate-based coupling agent, a zirconate-based coupling agent, a silicone-based water repelling agent and a fluorine-based water repelling agent to provide hydrophobicity.

According to the embodiment of the present invention, the stabilizer is at least one selected from the group consisting of a cellulose-based viscosity agent, a silicon-based viscosity agent, an inorganic-base viscosity agent, an organic-base viscosity agent, a dispersant, an anti-layer separation agent, an antifoaming agent, stearic acid, paraffin-based wax, a surfactant, a silicone-based water repelling agent, a fluorine-based water repelling agent and a silane-coupling agent, and the fiber may be at least one selected from among organic-base fiber or inorganic-base fiber According to the embodiment of the present invention, the inorganic expandable refractory composition may further comprise a filler, said filler being at least one selected from the group consisting of cement, plaster, dolomite, synthetic silica, perlite, fly ash, vermiculite, aluminum oxide, magnesium oxide and carbon black. According to the embodiment of the present invention, the inorganic expandable refractory composition comprises 1 wt% to 70 wt% expandable powder of a dry silicate, 20 wt% to 80 wt% of a silicate binder, 0.05 wt% to 10 wt% of a stabilizer. 0 01 wt% to 10 wt% of fiber, a foaming auxiliary, material and a refractory auxiliary material and wherein the dry silicate has a moisture content of 5 to 7%, wherein the silicate binder is solidified in a state having 10 wt% or more moisture, wherein the particle sizes of the dry silicate powder are of 5 mm or less and the stabilizer is at least one selected from the group consisting of a cellulose-based viscosity agent, a silicon-based viscosity agent, an inorganic-base viscosity agent an organic-base viscosity agent, a dispersant, an anti-layer separation agent, anti foaming agent stearic acid, paraffin-based wax, a surfactant, a silicone-based water repelling agent, a fluorine-based water repelling agent and a si lane-coupling agent and wherein the foaming auxiliary material is at least one selected from the group consisting of potassium bicarbonate, calcium bicarbonate, sodium bicarbonate, magnesium bicarbonate and ammonium bicarbonate and the refractory auxiliary- material is at least one selected from the group consisting of an antimony compound, aluminum hydroxide, magnesium hydroxide, calcium carbonate, boric acid, borax, a kaoline-group mineral, bentonite, clay,ettringite, a phosphate, a phosphorous-based flame retardant, a halogen-based flame retardant and a thermally curable resin.

According to the embodiment of the present invention, the expandable powder may further include a water repelling agent in 0 01 wt% to 10 wt%.

### [Advantageous Effects]

An inorganic expandable refractory composition of the present invention improves problems occurring when using a silicate alone, in which due to a property of the silicate, expanded cells produced inside when a silicate expands in flames do not form a honeycomb structure, and continuously expand and combine with the surrounding cells to form a foam that is non-uniform and has large pores, which causes cracks or insufficient heat insulation leading to declined fire resisting capacity, and therefore, is effective in providing uniform foam layer honeycomb-structured cells by using expandable powder.

In addition, the inorganic expandable refractory composition of the present invention is effective in exhibiting excellent thermal resistance and fire resisting capacity against fire even with a thin thickness by preventing the damage of a foam layer caused by flame such as hot blast due to its inorganic substance-based properties, and further reinforcing strength and enhancing heat insulation through the fine honeycomb-structured cells.

### [Mode for Disclosure]

One embodiment according to an inorganic expandable refractory composition of the present invention includes expandable powder formed by a dry silicate, and the expandable powder of a silicate may consist of 10 wt% to 50 wt% of an alkali metal oxide, 30 wt% to 80 wt% of silicon oxide and 0.1 wt% to 20 wt% of water.

The silicate used in the present invention is a compound represented by M₂O·nSiO₂·xH₂O, wherein M is an alkali metal belonging to group 1A of the periodic table, and n and x are integers. The alkali metal belonging to group 1A includes lithium, sodium, potassium and the like, and one or more types thereof may be mixed and used. For example, the silicate may be at least one selected from the group consisting of sodium silicate, potassium silicate and lithium silicate.

Such a silicate has moisture content of 40 wt% to 70 wt%, and has an expandable coefficient of linear expansion due to a glass substance-based property. Accordingly, when the silicate is heated, a foam having cells inside is formed as the silicate goes through foam expansion.

However, when a silicate expands, cells produced inside are not able to form a fine-sized honeycomb structure, and continuously expand and combine with surrounding cells due to weak cell barriers, and as a result, a foam that is non-uniform and has large pores is formed. Such a phenomenon causes cracks in the foam or decline in the heat insulation and fire resisting capacity, therefore the silicate is unable to properly exhibit its capacity.

In order to improve such a problem, embodiments of the present invention control cell sizes and expansion uniformity using particle sizes and amounts of the expandable powder, a coefficient of linear expansion of the silicate and the moisture content acting as an expansion agent, and provide changes in the strength of cells produced from the expansion.

In the present invention, particle sizes of the expandable powder affect cell sizes, and since large particle sizes of expandable powder lead to formation of large cells, and small particle sizes of expandable powder lead to formation of small cells, this is a natural principle, and therefore, additional descriptions will not be included. However, when the sizes are too big, a honeycomb structure is difficult to form, and accordingly, particle sizes are 5 mm or less.

Moisture content of the silicate acts as an expansion agent of the silicate, and for securing expansion sizes and uniformity, powder may be prepared by controlling moisture amount through drying. The expandable powder dried as above is mixed with the silicate to be used as a refractory composition in a steel frame structure and the like. The silicate used as a binder is also dried after being coated on a steel frame structure, but is not 100 % dried in a natural state, and is solidified in a state having approximately 10 wt% or more moisture. The expandable powder prepared in advance is dried to have lower moisture content, up to 5 wt% to 7 wt%, and in case of fire, the expandable powder expands to a smaller size than the silicates used as a binder in the coated refractory composition of the present invention. As a result, fine expanded cells of the expandable powder are distributed into expanded cells of the silicate used as a binder due to the difference in the magnitude of linear expansion even if they are the same material, thereby honeycomb-structured fine cells are obtained which enhances effects of heat insulation and fire resisting capacity. At the same time, foam uniformity is obtained. As described above, when a silicate is used alone, a foam that is non-uniform and has large pores is formed causing cracks or declined heat insulation leading to quick heat transfer to the inside, and as a result, a non-uniform phenomenon, in which parts touched by flames start to expand first, is observed. However, in the present invention, expandable powder prevents flames from rapidly spreading to the inside, and overall uniform expansion and cells are formed starting from the surface. As a result, such an effect prevents cracks in the foam and thereby effective fire resisting capacity is obtained.

In the present invention, expandable powder has a correlation with a mixed state of a prepared refractory composition and additional mixtures, therefore suitable dry % is determined from a condition of a refractory composition to be finally prepared.

Since expandable powder is prepared from silicate, initial content is almost determined. For example, a silicate is generally as in the following Table 1 depending on the type.

**[Table 1]**

| Category | Type 1 | Type 2 | Foundry | Type 3 | Type 4 |
|---|---|---|---|---|---|
| SiO₂ % | 36 to 38 | 34 to 36 | 30 to 33 | 28 to 30 | 23 to 25 |
| Na₂O % | 17 to 18 | 14 to 15 | 12 to 14 | 9 to 10 | 6 to 7 |
| Other % | 0.3 or less | 0.3 or less | 0.3 or less | 0.3 or less | 0.3 or less |
| H₂O % | 43.7 to 47 | 48.7 to 52 | 52.7 to 58 | 59.7 to 63 | 67.7 to 71 |

In Table 1, expandable powder is dried to have moisture content of 10 % or less for preparation, and accordingly, wt% changes as in the following Table 2 when the expandable powder is dried based on a final moisture amount of 10 % or less.

**[Table 2]**

| | Type 1 | | Type 2 | | Foundry | | Type 3 | | Type 4 | |
|---|---|---|---|---|---|---|---|---|---|---|
| SiO₂ % | 36 | 38 | 34 | 36 | 30 | 33 | 28 | 30 | 23 | 25 |
| Na₂O % | 17 | 18 | 14 | 15 | 12 | 14 | 9 | 10 | 6 | 7 |
| Other % | 0 | 0.3 | 0 | 0.3 | 0 | 0.3 | 0 | 0.3 | 0 | 0.3 |
| H₂O % | 5.89 | 6.25 | 5.33 | 5.7 | 4.66 | 5.25 | 4.11 | 4.48 | 3.22 | 3.58 |
| Total | 58.89 | 62.55 | 53.33 | 57 | 46.66 | 52.55 | 41.11 | 44.78 | 32.22 | 35.88 |
| SiO₂ % | 61.13 | 60.75 | 63.75 | 63.16 | 64.29 | 62.80 | 68.11 | 66.99 | 71.38 | 69.68 |
| Na₂O % | 28.87 | 28.78 | 26.25 | 26.32 | 25.72 | 26.64 | 21.89 | 22.33 | 18.62 | 19.51 |
| Other % | 0.00 | 0.48 | 0.00 | 0.53 | 0.00 | 0.57 | 0.00 | 0.67 | 0.00 | 0.84 |
| H₂O % | 10.00 | 9.99 | 9.99 | 10.00 | 9.99 | 9.99 | 10.00 | 10.00 | 9.99 | 9.98 |
| Total | 100 | 100 | 100 | 100 | 100 | 100 | 100 | 100 | 100 | 100 |

When prepared, the content by default changes according to the changes in the moisture amount.

According to one embodiment of the present invention, the expandable powder may be prepared by drying a silicate, and may further include at least one of a foaming auxiliary material and a refractory auxiliary material. An alkali metal of group 1A is included as the foaming auxiliary material, silicon oxide may be included as the refractory auxiliary material, and content of the expandable powder changes depending on the mixing. The alkali metal oxide affects performance and form of foaming, and the silicon oxide affects strength of foamed cells, and when the alkali metal oxide is included in greater than 50 wt%, cracks in the cells occur when foaming, and when the silicon oxide is included in greater than 80 wt%, foaming force is weak and effects thereof are small.

In the present invention, the foaming auxiliary material of the expandable powder may be a bicarbonate compound, for example, at least one selected from the group consisting of potassium bicarbonate, calcium bicarbonate, sodium bicarbonate, magnesium bicarbonate and ammonium bicarbonate. When controlling only the moisture, moisture distribution may be non-uniform depending on the drying condition and type. When fine adjustment for foaming is specifically required, uniformity for moisture may be provided by maximal drying, and in this case, sizes and forms of the foaming may be controlled to some degree by the mixed amount of the bicarbonate-based compound. In other words, the bicarbonate-based compound is dissolved in the silicate as much as the required size of foamed cells, and then the resulting mixture is maximally dried. Herein, the suitable amount of the bicarbonate-based compound with respect to the silicate is largely from 0.1 wt% to 20 wt% although it may vary depending on the type of the silicate. Having the amount in less than 0.1 wt% does not have big impact on foaming, but when the amount is greater than 20 wt%, sizes of the foamed cells are too large.

According to the present invention, a refractory auxiliary material is added when preparing the expandable powder. A refractory auxiliary material or a heat resisting auxiliary is added to make the cells formed from the expansion of the expandable powder by flames harder and prevent the expanded cells from being melted at high temperatures, or to enhance a flame retarding property. It is part of the invention to use as the refractory auxiliary material at least one selected from the group consisting of antimony compounds, aluminum hydroxide, magnesium hydroxide, calcium carbonate, boric acid, borax, kaoline-group minerals such as kaolinite, montmorillonite, dickite, illite, sericite and halloysite, bentonite, clay, ettringite, phosphates, phosphorous-based flame retardants, halogen-based flame retardants and thermally curable resins. In the present invention, the refractory auxiliary material is preferably approximately 0.1 wt% to 50 wt%, and when the content is 0.1 wt% or less, the effects are insignificant, and when the content is greater than 50 wt%, foaming capacity declines as the strength of the foamed cells increases.

According to one embodiment a method of providing hydrophobicity may be used when preparing the expandable powder. This is due to the fact that a silicate is hydrophilic to water. The method of providing hydrophobicity includes mixing a water repelling agent such as a silicone-based water repelling agent or a fluorine-based water repelling agent in approximately 0.01 wt% to approximately 10 wt%, or using a coupling agent such as silane, and the coupling agent may include, for example, an organic silane-based coupling agent including iso-octyltrimethoxysilane, methyltrimethoxysilane, octyltrietoxysilane, 3-aminopropyltriethoxysilane, 3-glycidyloxytriethoxysilane, 3-methacryloxypropyltrimethoxysilane, vinyltriethoxysilane, vinyltrimethoxysilane, vinyltri(2-methoxy-ethoxy)silane and the like, a titanate-based coupling agent including neopentyl(diallyl)oxy,trineodecano titanate, neopentyl(diallyl)oxy,tri(dodecyl)benzene-sulfonyl titanate, neopentyl(diallyl)oxy,tri(dioctyl)phosphate titanate, neopentyl(diallyl)oxy,tri(dioctyl)pyro-phosphato titanate, neopentyl(diallyl)oxy,tri(N-ethylenediamino)ethyl titanate, neopentyl(diallyl)oxy,tri(m-amino)phenyl titanate and the like, and a zirconate-based coupling agent including neopentyl(diallyl)oxy,trineodecano zirconate, neopentyl(diallyl)oxy,tri(dodecyl)benzene-sulfonyl zirconate, neopentyl(diallyl)oxy,tri(dioctyl)phosphate zirconate, neopentyl(diallyl)oxy,tri(dioctyl)pyro-phosphato zirconate, neopentyl(diallyl)oxy,tri(N-ethylenediamino)ethyl zirconate, neopentyl(diallyl)oxy,tri(m-amino)phenyl zirconate and the like, and the like. Using the above in an amount of less than 0.01 wt% is not effective, and using in an amount of greater than 10 wt% lowers economic feasibility compared to effects.

In addition, according to the present invention, the inorganic expandable refractory composition consists additionally of 20 wt% to 80 wt% of a silicate binder, 0.05 wt% to 10 wt% of a stabilizer and 0.01 wt% to 10 wt% of fiber besides the 1 wt% to 70 wt% of the expandable powder.

According to the present invention, the expandable powder is prepared by drying a silicate, and the expandable powder prepared as above is mixed again with a silicate binder to prepare a refractory composition. Herein, the silicate binder also expands in flames, and therefore, a foaming auxiliary material and a refractory auxiliary material are added for controlling expansion capacity and strength against flames. However, the preparation process is the same as the preparation process of the expandable powder prepared from a silicate as described above, and therefore, the same description will not be repeated.

Meanwhile, in the refractory composition according to the present invention, the stabilizer is used for securing workability and physical properties that the refractory composition needs to have to be used as paints or mastics. The stabilizer is at least one selected from the group consisting of a cellulose-based viscosity agent, a silicon-based viscosity agent, an inorganic-base viscosity agent, an organic-base viscosity agent, a dispersant, an anti-layer separation agent, an antifoaming agent, stearic acid, paraffin-based wax, a surfactant, a silicone-based water repelling agent, a fluorine-based water repelling agent and a silane-coupling agent. The amount of the stabilizer used is from 0.05 wt% to 10 wt%. Adding in less than 0.05 wt% is not effective, and adding in greater than 10 wt% inhibits fire resisting capacity, therefore, adding within the above-mentioned range is favorable.

The fiber in the refractory composition of the present invention may be at least one selected from among organic substance-based fiber such as polyethylene, polypropylene, polyester and nylon, or inorganic substance-based fiber such as glass fiber, mineral wool and zirconium. The fiber is added in a range of 0.01 wt% to 10 wt%, and adding in less than 0.01 wt% is not effective, and adding in greater than 10 wt% decreases workability due to excess use of fiber.

The organic substance-based may be mixed for securing physical properties that need to be exhibited during or after coating on a steel frame structure and the like, and the inorganic substance-based is used for securing physical properties when brought into contact with fire causing expansion of the refractory composition.

According to one embodiment of the present invention, additional treatment may be carried out on the expandable powder depending on the method of use of the refractory composition. Expandable powder starts from a silicate, and therefore, may be melted and gelated again in a silicate binder used when preparing the refractory composition as described above. Methods to eliminate such problems include a method of respectively preparing a refractory composition including expandable powder and not including expandable powder, and mixing the expandable powder to a steel frame structure at the time of working. Expandable powder is dissolved or gelated in a refractory composition to which a silicate binder is mixed, however, this phenomenon does not occur in a short time. This is because expandable powder is a powder in a rigidly hard state with moisture inside being controlled, and therefore, only a small part of the surface is melted during the working time of fireproof coating process and while being coated on a steel frame structure and then dried, and accordingly, this does not affect fire resisting capacity.

According to an embodiment of the present invention, the refractory composition may further include a thermoplastic and thermally curable binder as necessary for reinforcing water resistance and chemical resistance.

The inorganic expandable refractory composition of the present invention prepared as above improves a problem of foamed cells that a silicate has and forms uniform foam layer honeycomb-structured cells, does not produce toxic gas during expansion unlike fireproof paints, and does not experience damages in the expanded cells caused by flames, and consequently, has excellent fire resisting capacity to high temperature and long-term heating.

The present invention will be described in detail with reference to examples and experimental examples as follows based on the descriptions provided above, however, the scope of the present invention is not limited thereto.

### <Examples 1 to 6> Preparation of Binder for Expandable Powder of Present Invention

To a silicate, a foaming auxiliary material, a refractory auxiliary material, a water repelling agent and the like were introduced in order, and the mixture was sufficiently stirred for 4 hours at a rate of 1,000 rpm or higher to prepare a binder for expandable powder.

**[Table 3]**

| Category | Example 1 | Example 2 | Example 3 | Example 4 | Example 5 | Example 6 |
|---|---|---|---|---|---|---|
| Sodium Silicate (Number 1) | 100 | | | | | |
| Sodium Silicate (Number 2) | | 100 | | 98 | 96 | 91 |
| Potassium Silicate | | | 100 | | | |
| Ammonium Bicarbonate | | | | 2 | 2 | 2 |
| Borax | | | | | 2 | 2 |
| Silicone-based Water Repelling Agent | | | | | | 5 |

| | | | | | | |
|---|---|---|---|---|---|---|
| (unit: wt%) | | | | | | |

### <Examples 7 to 16> Preparation of Expandable Powder of Present Invention

The binders for expandable powder prepared in Examples 1 to 6 were dried to moisture content listed in Table 4. The drying may be carried out in various ways including hot blast, far-infrared rays, microwave and the like, and after drying, the particles were ground using a grinder so that particles sizes of 325 mesh or smaller became 90 wt% or greater, to prepare the expandable powder.

**[Table 4]**

| | |
|---|---|
| Example 7 | Dry Example 1 to moisture content of 7 wt% |
| Example 8 | Dry Example 2 to moisture content of 7 wt% |
| Example 9 | Dry Example 3 to moisture content of 7 wt% |
| Example 10 | Dry Example 4 to moisture content of 7 wt% |
| Example 11 | Dry Example 4 to moisture content of 5 wt% |
| Example 12 | Dry Example 5 to moisture content of 7 wt% |
| Example 13 | Dry Example 5 to moisture content of 5 wt% |
| Example 14 | Dry Example 6 to moisture content of 7 wt% |
| Example 15 | Dry Example 6 to moisture content of 5 wt% |
| Example 16 | Hydrophobic treatment of surface of Example 11 with methoxysilane |

However, in Example 16, a process of hydrophobic treatment of surface of expandable particles prepared in Example 11 with methoxysilane was added.

### <Examples 16 to 27> Preparation of Inorganic Expandable Refractory Composition of Present Invention

**[Table 5]**

| Category | Expandable Powder | Silicate Binder | Refractory Auxiliary Material | Stabilizer | Fiber | Filler |
|---|---|---|---|---|---|---|
| Example 16 | 20% (Example 7) | Sodium Silicate 72% | Magnesium Hydroxide 5% | HEC 1% | Ceramic Fiber 2% | |
| Example 17 | 20% (Example 8) | Sodium Silicate 72% | Magnesium Hydroxide 5% | HEC 1% | Ceramic Fiber | |
| Example 18 | 20% (Example 9) | Sodium Silicate 72% | Magnesium Hydroxide 5% | HEC 1% | Ceramic Fiber | |
| Example 19 | 15% (Example 10) | Sodium Silicate 72% | Aluminum Hydroxide 10% | Paraffin 1% | Glass Fiber 2% | |
| Example 20 | 15% (Example 11) | Sodium Silicate 72% | Aluminum Hydroxide 10% | Paraffin 1% | Glass Fiber 2% | |
| Example 21 | 15% (Example 12) | Sodium Silicate 72% | Aluminum Hydroxide 10% | Paraffin 1% | Glass Fiber 2% | |
| Example 22 | 15% (Example 13) | Sodium Silicate 72% | Aluminum Hydroxide 10% | Paraffin 1% | Glass Fiber 2% | |
| Example 23 | 15% (Example 14) | Sodium Silicate | Calcite 20% | Stearic Acid 1% | Glass Fiber 2% | Expanded Perlite 5% |
| Example 24 | 15% (Example 15) | Sodium Silicate | Calcite 20% | Stearic Acid 1% | Glass Fiber 2% | Expanded Perlite 5% |
| Example 25 | 15% (Example 13) | Sodium Silicate | Calcite 20% | HPC 1% | Glass Fiber 2% | Expanded Perlite 5% |
| Example 26 | 15% (Example 15) | Sodium Silicate | Calcite 20% | HPC 1% | Glass Fiber 2% | Expanded Perlite 5% |

| Example 27 | 15% (Example 16) | Sodium Silicate | Calcite 20% | HPC 1% | Glass Fiber 2% | Expanded Perlite 5% |
|---|---|---|---|---|---|---|
| Comparative Example 1 | None | Sodium Silicate | calcite 20% | HPC 1% | Glass Fiber 2% | Expanded Perlite 5% |
| Comparative Example 2 | None | Sodium Silicate | calcite 20% | Stearic Acid 1% | Glass Fiber 2% | Expanded Perlite 5% |

| | | | | | | |
|---|---|---|---|---|---|---|
| (Unit: wt%) HEC=hydroxyethylcellulose, HPC=hydroxypropylcellulose | | | | | | |

### <Experimental Example 1> Fire Resisting Capacity Comparison

A fire resisting capacity experiment on the refractory compositions prepared in Examples 16 to 24 and Comparative Examples 1 and 2 were carried out based on a standard heating curve temperature defined in KS F 2257 in accordance with the Ministry of Construction and Transportation Notice, and coating was carried out so that the thickness of a dried coated film on a H beam was from 12.0 mm to 12.1 mm. Fire resisting capacity was examined with criteria of 3 hours and 538 °C or lower.

**[Table 6]**

| Category | | Example 16 | Example 17 | Example 18 | Example 19 | Example 20 | Example 21 |
|---|---|---|---|---|---|---|---|
| Sample Temperature (°C) | 60 Minutes | 110 | 108 | 106 | 107 | 103 | 104 |
| | 120 Minutes | 258 | 247 | 257 | 241 | 237 | 237 |
| | 180 | 531 | 518 | 528 | 514 | 497 | 495 |
| | Minutes | | | | | | |
| Foam Layer Outer Appearance | | Favorable | Favorable | Favorable | Favorable | Excellent | Favorable |
| Crack Occurrence | | None | None | None | None | None | None |
| Category | | Example 22 | Example 23 | Example 24 | Comparative Example 1 | Comparative Example 2 | |
| Sample Temperature (°C) | 60 Minutes | 96 | 98 | 91 | 487 | 418 | |
| | 120 Minutes | 233 | 235 | 227 | 641 (Finish) | 578 (Finish) | |
| | 180 Minutes | 467 | 473 | 442 | | | |
| Foam Layer Outer Appearance | | Excellent | Favorable | Excellent | Poor | Poor | |
| Crack Occurrence | | None | None | None | Occurred | Occurred | |

### <Experimental Example 2> Comparison of Long-Term Safety

For the refractory compositions prepared in Examples 25 to 27, viscosity comparison over time was carried out, and safety of the expandable powder and the silicate of the present invention was examined. Viscosity was measured using a VT-04F viscometer manufactured by RION of Japan.

**[Table 7]**

| Category | Time of Preparation | After 1 Day | After 1 Week | After 60 Days | After 90 Days | After 150 Days |
|---|---|---|---|---|---|---|
| Example 25 | 15,370 | Impossible to Measure | | | | |
| Example | 15,150 | 15,350 | 23,800 | Impossible | | |
| 26 | | | | to Measure | | |
| Example 27 | 15,160 | 15,190 | 15,170 | 15,330 | 15,730 | 15,920 |

| | | | | | | |
|---|---|---|---|---|---|---|
| (Unit: CPS) | | | | | | |

From the results of Table 6, it was seen that, when using the inorganic expandable powder of the present invention, uniform foam layer honeycomb-structured expanded cells were formed and effects were bigger compared to Comparative Examples 1 and 2 using a silicate alone. In addition, more favorable results were obtained as the foaming auxiliary material was used, which indicates that it is more effective in obtaining expandable powder having uniform foamed cells. Particularly, fire resisting capacity was more enhanced when adding a refractory auxiliary material such as boric acid.

Results of Table 7 indicate safety on the use of the expandable powder and the silicate depending on hydrophobic treatment on the inorganic expandable powder of the present invention. As described above, inorganic expandable powder is made from a silicate, and therefore, is readily dissolved in silicate, and gelated by absorbing the silicate. However, with the hydrophobic treatment as in Example 26 or Example 27, such a phenomenon is prevented, and the expandable powder may be used for a long period of time. When the expandable powder is immediately used after mixing, no big problems occur even without hydrophobic treatment, and therefore, hydrophobic treatment is not absolutely necessary.

## Claims

1. An inorganic expandable refractory composition comprising 1 wt% to 70 wt% expandable powder of a dry silicate, 20 wt% to 80 wt% of a silicate binder, 0.05 wt% to 10 wt% of a stabilizer, 0.01 wt% to 10 wt% of fiber, a foaming auxiliary material and a refractory auxiliary material and wherein the dry silicate has a moisture content of 5 to 7%, wherein the silicate binder is solidified in a state having 10 wt% or more moisture, wherein the particle sizes of the dry silicate powder are of 5 mm or less and the stabilizer is at least one selected from the group consisting of a cellulose-based viscosity agent, a silicon-based viscosity agent, an inorganic-base viscosity agent, an organic-base viscosity agent, a dispersant, an anti-layer separation agent, an antifoaming agent, stearic acid, paraffin-based wax, a surfactant, a silicone-based water repelling agent, a fluorine-based water repelling agent and a silane-coupling agent and wherein the foaming auxiliary material is at least one selected from the group consisting of potassium bicarbonate, calcium bicarbonate, sodium bicarbonate, magnesium bicarbonate and ammonium bicarbonate and the refractory auxiliary material is at least one selected from the group consisting of an antimony compound, aluminum hydroxide, magnesium hydroxide, calcium carbonate, boric acid, borax, a kaoline-group mineral, bentonite, clay, ettringite, a phosphate, a phosphorous-based flame retardant, a halogen-based flame retardant and a thermally curable resin.

2. The inorganic expandable refractory composition of Claim 1, wherein the expandable powder further includes a water repelling agent in 0.01 wt% to 10 wt%.

3. The inorganic expandable refractory composition of any one of Claim 1 to 2, wherein the dry silicate is at least one selected from the group consisting of sodium silicate, potassium silicate and lithium silicate.

4. The inorganic expandable refractory composition of Claim 1, wherein the expandable powder further comprises at least one selected from the group consisting of an organic silane-based coupling agent, a titanate-based coupling agent, a zirconate-based coupling agent, a silicone-based water repelling agent and a fluorine-based water repelling agent to provide hydrophobicity.

5. The inorganic expandable refractory composition of any one of claims 1 to 4, wherein the fiber is at least one selected from the group consisting of organic-base fiber or inorganic-base fiber.

6. The inorganic expandable refractory composition of any one of Claims 1 to 5, further comprising a filler, said filler being at least one selected from the group consisting of cement, plaster, dolomite, synthetic silica, perlite, fly ash, vermiculite, aluminum oxide, magnesium oxide and carbon black.

## Patentansprüche

1. Anorganische expandierbare feuerfeste Zusammensetzung, umfassend 1 Gew.-% bis 70 Gew.-% expandierbares Pulver eines trockenen Silikats, 20 Gew.-% bis 80 Gew.-% eines Silikatbindemittels, 0,05 Gew.-% bis 10 Gew.-% eines Stabilisators, 0,01 Gew.-% bis 10 Gew.-% einer Faser, ein schäumendes Hilfsmaterial und ein feuerfestes Hilfsmaterial und wobei das trockene Silikat einen Feuchtigkeitsgehalt von 5 bis 7 % aufweist, wobei das Silikatbindemittel in einem Zustand mit 10 Gew.-% oder mehr Feuchtigkeit verfestigt ist, wobei die Teilchengröße des trockenen Silikatpulvers 5 mm oder weniger beträgt und der Stabilisator mindestens einer ist ausgewählt aus der Gruppe bestehend aus einem Viskositätsmittel auf Zellulosebasis, einem Viskositätsmittel auf Siliziumbasis, einem Viskositätsmittel auf anorganischer Basis, einem Viskositätsmittel auf organischer Basis, einem Dispergiermittel, einem Antischicht-Trennmittel, einem Entschäumer, Stearinsäure, Wachs auf Paraffinbasis, einem Tensid, einem wasserabweisenden Mittel auf Silikonbasis, einem wasserabweisenden Mittel auf Fluorbasis und einem Silanhaftvermittler und wobei das schäumende Hilfsmaterial mindestens eines ist ausgewählt aus der Gruppe bestehend aus Kaliumbicarbonat, Kalziumbicarbonat, Natriumbicarbonat, Magnesiumbicarbonat und Ammoniumbicarbonat, und das feuerfeste Hilfsmaterial mindestens eines ist ausgewählt aus der Gruppe bestehend aus einer Antimonverbindung, Aluminiumhydroxid, Magnesiumhydroxid, Kalziumcarbonat, Borsäure, Borax, einem Mineral der Kaolingruppe, Bentonit, Ton, Ettringit, einem Phosphat, einem Flammschutzmittel auf Phosphorbasis, einem Flammschutzmittel auf Halogenbasis und einem thermisch härtbaren Harz.

2. Anorganische expandierbare feuerfeste Zusammensetzung nach Anspruch 1, wobei das expandierbare Pulver weiter ein wasserabweisendes Mittel in 0,01 Gew.-% bis 10 Gew.-% enthält.

3. Anorganische expandierbare feuerfeste Zusammensetzung nach einem der Ansprüche 1 bis 2, wobei das trockene Silikat mindestens eines ist ausgewählt aus der Gruppe bestehend aus Natriumsilikat, Kaliumsilikat und Lithiumsilikat.

4. Anorganische, expandierbare, feuerfeste Zusammensetzung nach Anspruch 1, wobei das expandierbare Pulver weiter mindestens eines umfasst, ausgewählt aus der Gruppe bestehend aus einem organischen Haftvermittler auf Silanbasis, einem Haftvermittler auf Titanatbasis, einem Haftvermittler auf Zirkonatbasis, einem wasserabweisenden Mittel auf Silikonbasis und einem wasserabweisenden Mittel auf Fluorbasis, um Hydrophobie bereitzustellen.

5. Anorganische expandierbare feuerfeste Zusammensetzung nach einem der Ansprüche 1 bis 4, wobei die Faser mindestens eine ist ausgewählt aus der Gruppe bestehend aus einer Faser auf organischer Basis oder einer Faser auf anorganischer Basis.

6. Anorganische expandierbare feuerfeste Zusammensetzung nach einem der Ansprüche 1 bis 5, die weiter einen Füllstoff enthält, wobei der Füllstoff mindestens einer ist ausgewählt aus der Gruppe bestehend aus Zement, Gips, Dolomit, synthetischer Kieselsäure, Perlit, Flugasche, Vermiculit, Aluminiumoxid, Magnesiumoxid und Ruß.

## Revendications

1. Composition réfractaire expansible inorganique comprenant 1 % en poids à 70 % en poids de poudre expansible d'un silicate sec, 20 % en poids à 80 % en poids d'un liant silicate, 0,05 % en poids à 10 % en poids d'un stabilisant, 0,01 % en poids à 10 % en poids de fibres, un matériau auxiliaire de moussage et un matériau auxiliaire réfractaire, dans laquelle le silicate sec a une teneur en humidité de 5 à 7 %, dans laquelle le liant silicate est solidifié dans un état ayant 10 % en poids ou plus d'humidité, dans laquelle la granulométrie de la poudre de silicate sec est de 5 mm ou moins et le stabilisant est au moins l'un choisi dans le groupe constitué par un agent de viscosité à base de cellulose, un agent de viscosité à base de silicium, un agent de viscosité inorganique, un agent de viscosité organique, un dispersant, un agent anti-déstratification, un agent anti-moussant, l'acide stéarique, une cire à base de paraffine, un tensioactif, un agent hydrofuge à base de silicone, un agent hydrofuge à base de fluor, et un agent de couplage de type silane, et dans laquelle le matériau auxiliaire de moussage est au moins l'un choisi dans le groupe constitué par le bicarbonate de potassium, le bicarbonate de calcium, le bicarbonate de sodium, le bicarbonate de magnésium et le bicarbonate d'ammonium et le matériau auxiliaire réfractaire est au moins l'un choisi dans le groupe constitué par un composé de l'antimoine, l'hydroxyde d'aluminium, l'hydroxyde de magnésium, le carbonate de calcium, l'acide borique, le borax, un minéral du groupe du kaolin, la bentonite, l'argile, l'ettringite, un phosphate, un agent ignifugeant à base de phosphore, un agent ignifugeant à base d'halogène et une résine durcissable thermiquement.

2. Composition réfractaire expansible inorganique selon la revendication 1, dans laquelle la poudre expansible contient en outre un agent hydrofuge à raison de 0,01 % en poids à 10 % en poids.

3. Composition réfractaire expansible inorganique selon l'une quelconque des revendications 1 et 2, dans laquelle le silicate sec est au moins l'un choisi dans le groupe constitué par le silicate de sodium, le silicate de potassium et le silicate de lithium.

4. Composition réfractaire expansible inorganique selon la revendication 1, dans laquelle la poudre expansible comprend en outre au moins l'un choisi dans le groupe constitué par un agent de couplage à base de silane organique, un agent de couplage à base de titanate, un agent de couplage à base de zirconate, un agent hydrofuge à base de silicone et un agent hydrofuge à base de fluor pour conférer un caractère hydrophobe.

5. Composition réfractaire expansible inorganique selon l'une quelconque des revendications 1 à 4, dans laquelle les fibres sont au moins l'une choisie dans le groupe constitué par les fibres organiques et les fibres inorganiques.

6. Composition réfractaire expansible inorganique selon l'une quelconque des revendications 1 à 5, comprenant en outre une charge, ladite charge étant au moins l'une choisie dans le groupe constitué par le ciment, le plâtre, la dolomite, la silice synthétique, la perlite, les cendres volantes, la vermiculite, l'oxyde d'aluminium, l'oxyde de magnésium et le noir de carbone.
